# EUROPEAN PATENT APPLICATION

(11) **EP 1 681 082 A2**
(43) Date of publication of application: **19.07.2006**
(21) Application number: 04793089.6
(22) Date of filing: 21.10.2004
(51) Int. Cl.: B01D 17/022

(54) **MIXED LIQUID SEPARATOR**

(30) Priority: 22.10.2003 JP 2003362329
(71) Applicant: Rix Corporation, Fukuoka-shi, Fukuoka 812-8672 (JP)
(72) Inventor: ISOGAI, M., c/o Toyota Jidosha Kabushiki Kaisha, Toyota-shi, Aichi 471-8571 (JP); YOSHIZAKI, N., c/o Toyota Jidosha Kabushiki Kaisha, Toyota-shi, Aichi 471-8571 (JP); OKAMOTO, Hiroyuki, c/o Rix Corporation, Toyota-shi, Aichi 471-0835 (JP); HISAJI, Tatsuya, c/o Rix Corporation, Toyota-shi, Aichi 471-0835 (JP)
(74) Representative: TBK-Patent
(86) International application number: PCT/JP2004/015977
(87) International publication number: WO 2005/038408

(57) **Abstract**

The present invention relates to a mixed liquid separating apparatus for separating a particular substance from a mixed liquid containing at least two kinds of substances C and O of which follow-rotating property is different. It comprises a cylindrical outer member 1, a rod-shaped inner member 2 and a driving means 3. The outer member 1 has an inducing port 11 for inducing the mixed liquid at one end thereof, and an expelling port 16 for expelling the separated particular substance O at other end thereof. The inner member 2 is disposed coaxially with said outer member 1 to be relatively rotatable thereto. The driving means 3 relatively rotates said outer member 1 and said inner member 2. Here, at least one of an inner peripheral surface of said outer member 1 and an outer peripheral surface of said inner member 2 has a spiral guiding wall for guiding the particular substance O from the one end to the other end, by the relative rotation between said outer member and said inner member. Thus, the particular substance 0 is separated during feeding to the other end along the guiding wall.

## Description

### Technical Field

The present invention relates to an apparatus used for separating a particular substance from a mixed liquid such as effluent discharged from a factory in which at least two kinds of substances, are contained.

### Background Art

In an iron manufacturing and a metal processing, mixed liquids containing two or more substances are generated. One example is a coolant liquid in which an oil used for a surface lubrication or machine lubrication in processing is floated on a surface thereof. Another example is an effluent generated in washing step and degreasing step, and a sludge containing powder such as swarf or a metal processed article. For separating the oil and powder from these mixed liquids to be re-used, various kinds of apparatus have been developed.

For example, as a representative apparatus for collecting an oil component (flown-up oil) flown up on the liquid surface from the used coolant, a belt skimmer has been known. In the belt skimmer, between a driving pulley disposed above a tank containing the coolant, and a following pulley immersed into the coolant, an endless belt is spanned. By continuously feeding the endless belt, the flown-up oil adhered to the belt is continuously fed out from the tank.

However, the flown-up oil fed out normally contains much coolant, in addition to the oil component. For this reason, the flown-up oil including the coolant adhered to the belt surface needs to be collected, and separated by utilizing difference of specific gravity between the oil component and the coolant.

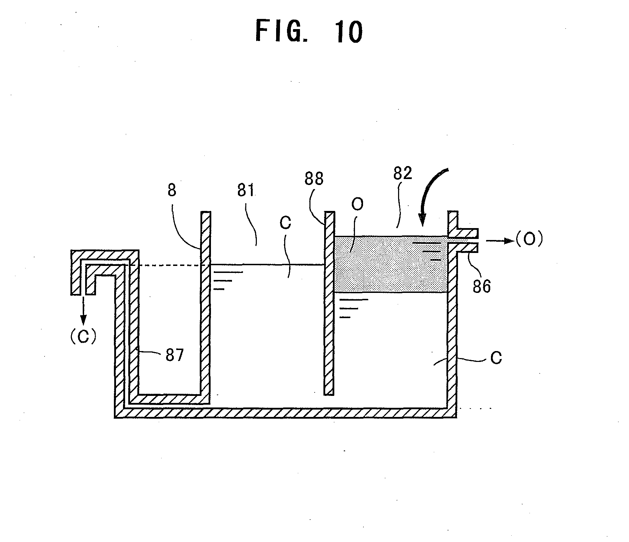

For such separation of the oil component and the coolant, a separating tank utilizing the difference of gravity (referred briefly "gravity-difference type separating tank") is generally used. As shown in Fig. 10, the separating tank 8 is provided with a partition wall 88 which partitions an inner space into two, left and right rooms 81 and 82. They are communicated with each other by a throughole formed at a lowermost part of the partitioning wall 88.
When the float-up oil including the coolant C is supplied into the right room 82 as shown by an arrow, the coolant C and the oil component O are separated by difference of the gravity.

That is, the coolant C stays at a lower part in the rooms 81 and 82, while the oil component O accumulates at an upper part in the right room 82. Both of them are to be recovered through discharge ports 86 and 87 respectively. However, there have been case the separating tank does not function properly. For example, when the oil component at the surface of the float-up oil contacts with the oxygen for a long time during the separation, it may be hardened or solidified. Also, when the coolant contains the dust or sludge, it may be accumulated at the discharge port.

Japanese Patent Laid-open No. 2003-71205 discloses to separate the slurry containing the particle including the oil component and the water, by utilizing the principle of centrifugal separating. The particles are separated in advance, then the water and the oil are separated by the separating tank. This method does not suffer from deterioration of the tank function resulted from accumulation of the particles in the tank. However, problem that the oil component solidifies has not been improved.

### Summary of the Invention

As mentioned above, the conventional method requires the separating means using the gravity difference such as the separating tank. In view of this, the present invention intends to provide the separating apparatus which can separate the particular substance from the mixed liquid including at least two kinds of substances of which follow-rotating property is different, without using the above separating means.

The mixed liquid separating apparatus of the present invention for separating a particular substance from a mixed liquid containing at least two kinds of substances of which follow-rotating property is different, comprises a cylindrical outer member having an inducing port for inducing the mixed liquid at one end thereof, and an expelling port for expelling the separated particular substance at other end thereof; a rod-shaped inner member disposed coaxially with said outer member to be relatively rotatable thereto; a driving means for relatively rotating said outer member and said inner member; and at least one of an inner peripheral surface of said outer member and an outer peripheral surface of said inner member having a spiral guiding wall for guiding the particular substance from the one end to the other end, by the relative rotation between said outer member and said inner member.

Wherein the particular substance is separated during feeding to the other end along the guiding surface by the relative rotation between said outer member and said inner member.

The inner member can have a pillar shape of a cylindrical shape, so long as it has a rod-shape or bar-shape. On an outer peripheral surface, a spiral guiding wall can be provided, as long as the inner member has the rod shape or bar shape. For example, the guiding wall constructed by winding a coil spirally like a coil spring is included.

In the mixed liquid separating apparatus of the present invention, the outer member and the inner member preferably have property or quality to be follow-rotated to the particular substance strongly.

The outer member preferably has a cylindrical outer surface. The inner member preferably has a spiral guiding surface on an outer surface thereof, which is preferably constructed by a male screw.

The outer member preferably has a discharge means including a particular substance receiving portion and a particular substance discharging portion. The particular substance receiving portion is formed at other end of the outer member and having an expelling port to receive the particular substance expelled therefrom. The particular substance discharging portion is formed at the particular substance receiving portion to receive the particular substance accumulated thereat.

The mixed liquid preferably contains a low viscosity liquid and a high viscosity liquid, and the high viscosity liquid corresponds to the particular substance. The low viscosity liquid is preferably the coolant, while the high viscosity liquid is preferably the float-up oil flown up on the liquid surface of the coolant.

The particular substance is preferably a metal waste, and the mixed liquid is preferably a sludge containing a metal waste.

The mixed liquid separating apparatus according to the present invention can separate the particular substance in the mixed liquid, by the simple construction comprised of the outer member, inner member and the driving means. The mixed liquid contains at least two kinds of substance of which follow-rotating (moving) property is different.

The mixed liquid separating apparatus separates the mixed liquid by utilizing difference of the follow-rotation property between the inner member and the outer member, and the particular substance to be separated. As a result, the substances such as the liquids of which viscosity is different, and which have different adhering force to the inner member and the outer member can be separated. As the mixed liquid, mixture of water and oil, mixture of two oils of which viscosity is different each other, sludge and slime can be illustrated.

Thanks to difference of the follow-rotating property, the particular substance can be effectively collected, by suitably selecting various separating conditions such as the numbers of rotation of the inner member and the outer member. Thus, the mixed liquid separating apparatus does not require the separating means such as the gravity-difference type separating tank.

By using the conventional cylinder and the male screw which are easily available as the inner member and the outer member respectively, the separating apparatus can be made simple, and the upkeeping can be made easy.

Further the discharging means can discharge the particular substance expelled from the expelling port effectively.

### Brief Explanation of the Drawings

Figure 1 is a front view of the mixed liquid separating apparatus of the embodiment 1;

Figure 2 is a cross-sectional view taken along a line X-X' in Figure 1, and corresponds to an axial view of the mixed liquid separating apparatus shown in Figure 1;

Figure 3 is a cross-sectional view taken along a line Y-Y' in Figure 1, and corresponds to a radial view of the mixed liquid separating apparatus shown in Figure 1;

Figure 4 is a schematic view showing a state where the mixed liquid separating apparatus of the embodiment 1 is set to the tank containing the used coolant;

Figure 5 is a graph showing relation between the oil amount collected by the mixed liquid separating apparatus and the numbers of rotation of the embodiment 1;

Figure 6 is a graph showing relation between the oil amount collected by the mixed liquid separating apparatus and the oil viscosity of the embodiment 1;

Figure 7 is an axial cross-sectional view of the mixed liquid separating apparatus of the embodiment 2, and corresponding to the cross-sectional view taken along a line W-W' in Figure 8;

Figure 8 is an axial cross-sectional, view of the mixed liquid separating apparatus of the embodiment 2, and corresponding to the cross-sectional view taken along the line V-V' in Figure 7;

Figure 9 is a radial cross-sectional view of the inducing port of the mixed liquid separating apparatus of the embodiment 3, the flow adjusting plate being attached to the inducing port; and

Figure 10 is an explanatory view of a gravity-difference type separating tank.

### Embodying Mode of the Invention

In the following, an embodying mode of a mixed liquid separating apparatus of the present invention will be explained. The mixed liquid separating apparatus separates, from a mixed liquid containing at least two kinds of substances of which follow-rotating property is different, a particular substance. The mixed liquid containing a liquid of high viscosity and a liquid of low viscosity, can be suitably separated. As the mixture, water and oil, oils having different viscosity etc. can be illustrated. Also, the mixed liquid can be a sludge containing a metal waste such as swarf, or mixture of aqueous liquid and non-aqueous liquid.

The mixed liquid separating apparatus of the present invention is comprised of an inner member, an outer member and a driving means. The outer member has an inducing port for inducing the mixed liquid at one end thereof, and has an expelling port for expelling the particular substance separated at other end thereof. Rod-shape inner member is disposed coaxially with the outer member to be relatively rotated.

There is no restriction for a material of the outer member and the inner member. However, the material which does not change quality of the outer member and inner member are immersed into or contacted with the mixed liquid, is preferable. For this reason, the material needs to be selected corresponding to the kinds of the mixed liquid. For example, the outer member and inner member can be made of metal or resin. Size of the outer member and the inner member can be suitably selected, depending on the kinds of the mixed liquid and the separating amount.

There is no restriction for shape and size of the inducing port of the outer member, as long as it can induces the mixed liquid into the outer member. The inducing port can be one opened end of an tubular or cylindrical member, or an opening formed on an outer peripheral surface of tubular or cylindrical member. With the inducing port immersed into the mixed liquid, the mixed liquid is induced continuously through the inducing port by the follow-rotating force of the mixed liquid to the outer member and the inner member. The opened portion is preferably an opening extending axially. Such opening can, when the mixed liquid separating apparatus is set to be crossed with the liquid surface, induce the mixed liquid continuously in spite of level change of the liquid surface.

There is no restriction for type of the expelling port of the outer member, as long as it can expel the particular substance separated outside the outer member. For example, it can be opened at one end of an tubular or cylindrical member, or an opening formed on an outer peripheral surface of tubular or cylindrical member. Especially, the expelling port constructed by the opened portion opened to the outer peripheral surface of the outer member, can expels the particular substance outside the separating apparatus effectively. There is no restriction for the size and shape of the expelling port. As the expelling port, an tubular member extending from the opened portion toward outside of the separating apparatus to gather or collect the particular substance into the collecting box can be adopted.

Further, the mixed liquid separating apparatus has discharging means including a particular substance receiving portion and a particular substance discharging portion. The particular substance receiving portion is formed at the other end of the outer member to receive the particular substance expelled from the expelling port. The particular substance discharging portion is formed at the particular substance receiving portion to discharge the particular substance accumulated thereat. Such mixed liquid separating apparatus can discharge the particular substance outside thereof effectively.

There is no restriction for the shape and size of the particular substance receiving portion, as long as it can receive the particular substance expelled from the expelling port. For example, the particular substance receiving port having a cylindrical portion of which bottom is closed and which is disposed coaxially with the outer member, is preferable. It can prevent flown-out of the particular substance through a port other than the particular substance discharging port.

The cylindrical portion can be easily processed and is cheap. When a plate is used as a transferring means in the discharging means (to be explained later), the particular substance receiving port preferably has a circular cylindrical shape. The plate rotates relative to the particular substance receiving port. For this reason, if the particular substance receiving port has shape other than the circular cylindrical shape (rectangular shape, for example), there may exist an area in the particular substance receiving port where the plate does not reach. Thus, some particular substance may not be discharged.

There is no restriction for type of the particular substance discharging portion as long as it can discharge the particular substance accumulated in the particular substance receiving portion. For example, an opened portion formed at the particular substance receiving portion as the particular substance discharging portion, can discharge the particular substance accumulated at the particular substance receiving portion outside the separating apparatus therethrough sequentially. For such purpose, the opened portion can be formed at a bottom portion or on an outer peripheral surface of the particular substance receiving portion formed by the cylindrical portion of which bottom is closed.

If the discharging port constructing the particular substance discharging portion opens in the gravity acting direction when the separating apparatus is set, the particular substance accumulated in the particular substance receiving portion can be effectively discharged by the gravity. The discharging port opened in the gravity acting direction, can make accumulation of the particular substance and the waste on a side surface thereof difficult. Thus, choke or clog of the discharging port due to solidification of the particular substance and accumulation of the waste or sludge at the discharging port can be reduced.

The discharging means preferably has a transferring means for transferring the particular substance accumulated at the particular substance receiving portion to the discharging port. As the transferring means, a plate fixed to the inner member can be preferably adopted. It rotates relative to the particular substance receiving portion by the relative rotation of the outer member and the inner member to push and gather the particular substance accumulated at the particular substance receiving portion. That is, the plate fixed to the inner member rotates relative to the particular substance receiving portion or the particular substance discharging portion formed in the outer member. Rotation of the plate relative to the particular substance receiving portion pushes the particular substance accumulated in the particular substance receiving portion to collect it, whereby the particular substance can be effectively discharged. Even if the particular substance is apt to solidify by the leaving for long time, it can be made flowable state by the plate. Thus, solidification of the particular substance accumulated in the particular substance receiving portion can be prevented.

There is no restriction for the size and numbers of the plates as long as it has a surface to push the particular substance.
The plate can be made of, in addition to a metallic plate or a resin plate having a predetermined rigidity, an elastic body such as a rubber plate elastically abutted to the particular substance receiving portion.

There is no restriction for a setting direction of the outer member and the inner member. However, setting the outer member and the inner member so that axial directions thereof correspond to the gravity direction can reduce the setting space. In addition, the axes of the outer member and the inner member are hardly shifted or inclined by the gravity. The outer member and the inner member are disposed so that the inducing port positions at the lower side and the expelling port positions at the upper side.
Even when the axes of the outer member and the inner member make the predetermined angle relative to the gravity acting direction, shift or inclination of the axes due to gravity can be prevented by a supporting tool which supports the outer member and the inner member in the coaxial state.

The driving means rotating the outer member and the inner member relatively is preferably comprised of a motor. An electrical circuit for controlling the motor so that the numbers of rotations of the separating apparatus changes corresponding the kind of mixed liquid can be provided. Bearings can be provided for the motor to prevent shift or inclination of the axes of the outer member and the inner member.

In the mixed liquid separating apparatus of the present invention, the outer member and inner member relatively rotate by the rotating speed that the particular substance in the mixed liquid can follow-rotates to the outer member and the inner member.
The rotating speed varies depending on size of the separating apparatus, kind of the mixed liquid, and processing ability of the separating apparatus. It is preferably selected to range from 10 to 200 rpm. Weak centrifugal force of 0.002 to 0.9 G is generated. It is not so strong that the particular substance is pressed onto the inner peripheral surface of the outer member, or the particular substance is gone away from the inner member. In view of the collecting ability and the durability of the separating apparatus, the numbers of rotations of 30 to 120 rpm is preferable.

At least one of an inner peripheral surface of the outer member, and an outer peripheral surface of the inner member is provided with a spiral guiding means which guides the particular substance from one end to other end of the outer member, by relative rotation between the outer member and the inner member. The guiding wall separates the particular substance during feeding therealong.

The outer member and the inner member preferably have a quality to follow-rotate to the particular substance in the mixed liquid. For example, the substance easily adhering to the outer member and the inner member physically or chemically follow-rotates to them.

There is no restriction for the shape of the outer member and the inner member, so long as at least one of the inner peripheral surface of the outer member and the outer peripheral surface of the inner member has the spiral guiding wall. Especially, the outer member having the cylinder-shape inner peripheral surface, and the inner member having the spiral guiding wall on the outer peripheral surface is formed, are preferable. As such inner member, a male screw, spring or coil spirally wound can be illustrated. The particular substance, due to adhering force and the frictional force thereof, follow-rotates to the cylindrical inner peripheral surface of the outer member, and the guiding wall (male screw) of the inner member. For further increasing the follow-rotating character, the inner peripheral surface of the outer member or the outer peripheral surface of the inner member is formed into a nap-shaped or brush-shaped convex/concave surface. The convex/concave surface facilitates adhering of the powder such as the metallic dust thereto. At least one of the inner peripheral surface of the outer member or the outer peripheral surface of the inner member can be made into a hydrophilic, surface hydropholic surface, or magnetic surface.

The particular substance contained in the mixed liquid induced through the inducing port is fed or supplied to the other end along the guiding wall, by the relative rotation between the outer member and the inner member. The remaining substance other than the particular substance in the mixed liquid hardly follow-rotating to the outer member and the inner member, is removed from the outer member and the inner member, during feeding of the particular substance from one end to other end of the outer member. The remaining substance is removed even if it is induced through the inducing port together with the particular substance. When the particular substance is adhered to the convex/concave surface formed by the elastic material, it can be scraped off by the spiral guiding wall, and then fed from one end to the other end of the outer member along the guiding wall smoothly.

The mixed liquid containing plural kinds of liquids having slightly different viscosity can be separated, by adjusting size of the gap between the outer member and the inner member, and the numbers of rotation of the rotating means. When the same mixed liquid is separated by the separating apparatus under different conditions such as size of the gap and the numbers of rotations of the rotating means, the processing ability may differ. That is, the separating amount, and amount of the remaining substance contained in the particular substance having been separated may vary. For this reason, adjusting the gap size and determining the number of rotation corresponding to the usage of the particular substance are preferable.

One mixed liquid separating apparatus of he present invention sufficiently provided for the tank which has impounded the waste liquid collected in the metal processing step. The remaining substance contained in the collected particular substance can be separated by the mixed liquid separating apparatuses of which follow-rotating property, size and the numbers of rotations of the outer member and the inner member are different.

### Preferred Embodiment

### (Embodiment 1)

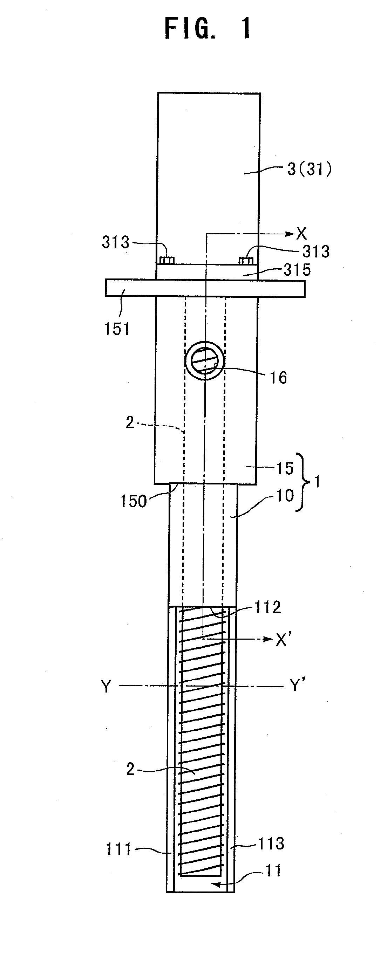

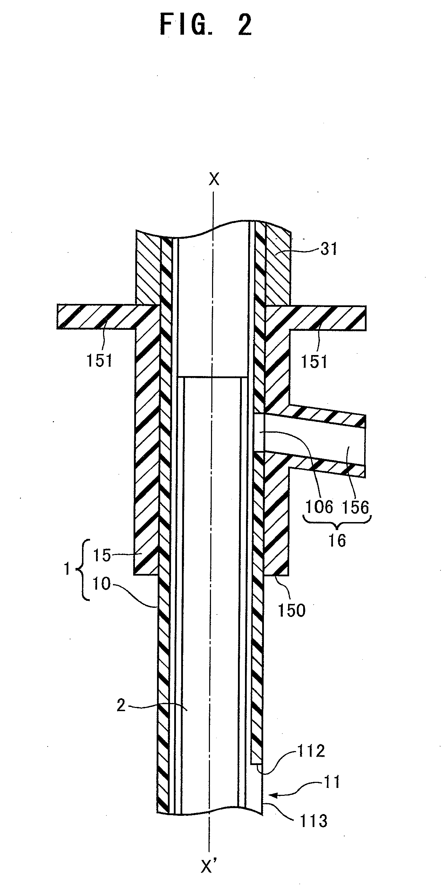

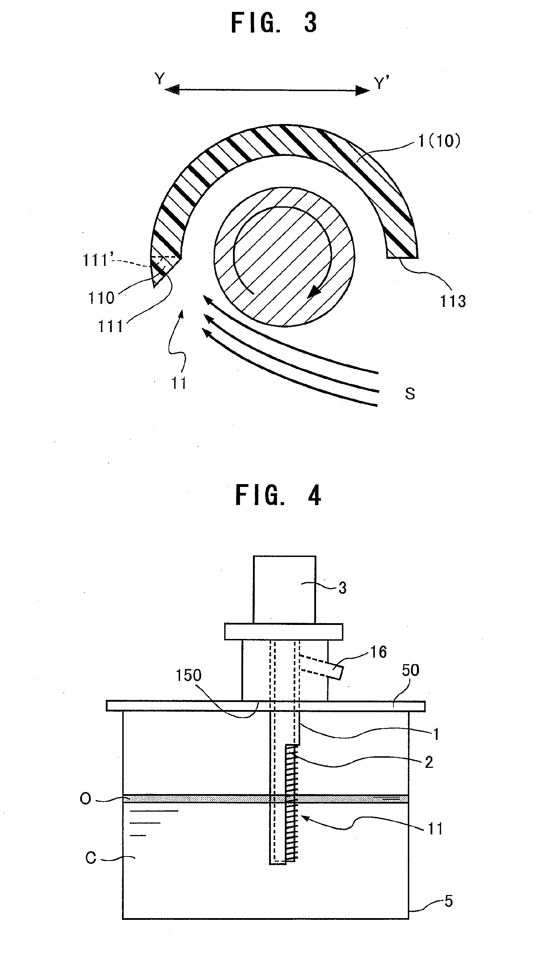

A mixed liquid separating apparatus of the embodiment 1 will be explained with reference to attached Figs. 1 to 3. Fig. 1 is a front view of the mixed liquid separating apparatus of the embodiment 1, Figs. 2 and 3 are respectively cross-sectional view along lines X-X' and Y-Y' in Fig. 1.

The mixed liquid separating apparatus is comprised of an outer member 1, an inner member 2 and a driving means 3. The outer member 1 includes an outer cylindrical body 10 and a connecting portion 15. The outer cylindrical body 10 is a circular cylindrical pipe made of resin, and is provided with an inducing port 11 on an outer peripheral surface thereof. The inducing port 11 is formed by cutting the on end of the outer cylindrical body 10 axially by a predetermined length to be opened by 180° degrees (semi-circular). The inducing port 11 is defined by axially opened end surfaces 111 and 113 extending axially, and a peripherally opened end surface 112. It is noted that one end surface 111 is not extended radially, when viewed in the lateral cross-sectional view.
If the one end is cut axially to form the edge portion 110 extending radially in the lateral cross-sectional view, the cut surface 111' of the edge portion 110 does not suitably guide flow of the mixed liquid S flowing into the space between the outer member 1 and the inner member 2.

In view of this, at side of the inducing port 11 where the mixed liquid flows in, the edge portion 110 is formed of which width gradually decrease toward a tip end to thereby form the cut end surface 111. The cut surface 111 makes the predetermined angle relative to the cut end surface 111'. Such axially opened end surface 111 makes flowing of the mixed liquid smooth.

At other end of the outer cylindrical body 10, a circular opening 106 which forms a part of the expelling port to be explained later, is provided.

The connecting portion 15 is made of resin which is same as that of the outer cylindrical body 10, and has a cylindrical shape. It is provided with a flange 151 at one end thereof. Other end of the connecting portion 15 has a bottom surface which forms a set surface 150, when the separating apparatus is set on the mixed liquid tank etc.

On the outer peripheral surface of the connecting portion 1 5, a lateral cylindrical portion 156 is formed. The lateral cylindrical portion 156 having a circular cylindrical shape is formed integral with the connecting portion 15 and extended outwardly. It is inclined downwardly (viewed in Fig. 2), so that the top end thereof approaches to the set surface 150. Within the connecting portion 15, the outer cylindrical body 10 is inserted coaxially, whereby the circular opening 1 0 6 of the outer cylindrical body 10 is communicated with the lateral cylindrical portion 156 of the connecting portion 15. Thus, the expelling port 16 is formed. Length of the connecting portion 15 is shorter than that of the outer cylindrical body 10, which results in downwardly protrusion of the lower part of the outer cylindrical body 10 from the set surface 150 of the connecting portion 15.

The inner member 2 is constructed by a trapezoidal screw or thread, and disposed coaxially with the outer member (outer cylindrical body 10). The outer member 1 and the inner member 2 are disposed so that gap size formed therebetween is smaller than 1 mm.

Driving means 3 includes a geared motor (not shown) and a case 31 containing the motor therein. The case 31 has a flange portion 315 at side of the opening, to be connected with the flange portion 151 of the outer member 1 (connecting portion 15) by a bolt 313. The geared motor is connected to one end of the inner member 2 to drive it. The electrical circuit which controls the geared motor includes an inverter controlling frequency of the motor. Thus, the numbers of rotation of the inner member 2 can be arbitrarily selected.

### (Measurement of Collected Oil Amount)

The flown-up oil is collected from the tank which stores the coolant and the lubricant and the lubricant is separated, by utilizing the mixed liquid separating apparatus of the embodiment 1.
In the following, the separating process will be explained with reference to Fig. 4.

Into the tank 5, the coolant C of 18L and the lubricant O of 0.25L are stored, to make thickness of the oil film 12 mm. On an upper surface of the tank 5, a set surface 50 for setting the separating apparatus thereon is formed. The setting surface 50 is provided with an inset hole into which a lower part (outer cylindrical body 10) of the separating apparatus can be inserted.
The separating apparatus can be fixed to the tank by loading the set surface 150 onto the setting surface 50. Here, distance from the liquid surface (front surface of the lubricant O) to the peripherally opened end surface 112 of the inducing portion 11 is 90 mm, while distance from peripherally opened end surface 112 to expelling port 16 (center of the circular opening 106) is 100 mm.

After setting of the separating apparatus, rotation of the inner member 2 by the driving means 3 causes rotation (movement) of the float-up oil in the tank 5 following to rotation of the inner member 2. The float-up oil to be induced through the inducing portion 11 contains the coolant C, as well as the lubricant O. The lubricant O having larger viscosity than the coolant C receives the resisting force from the stationary outer member 1, and receives the rotating force from the rotating inner member 2. Thus, the lubricant O follow-rotating (moving) between the outer member 1 and the inner member 2, is fed along the male screw of the inner member 2 to the expelling port 16. On the other hand, the coolant C having low follow-rotating property is hardly fed. The coolant C gradually drops through the gap to return to the tank 5.

### (Measurement 1)

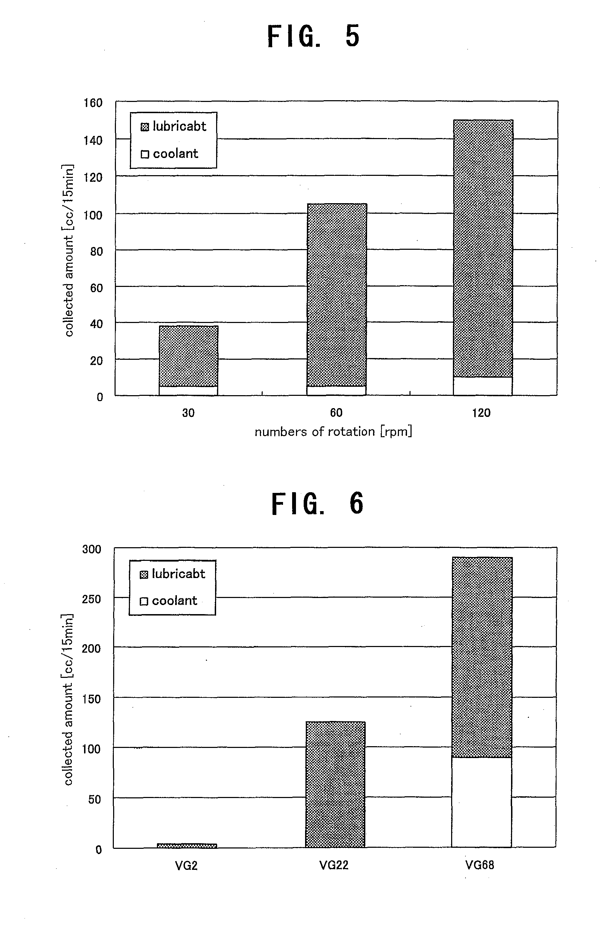

By utilizing the mixed liquid separating apparatus of the embodiment 1, the lubricant is separated from the coolant. The lubricant to be separated has the viscosity grade (classification of lubricant viscosity of ISO) of VG 68, while the coolant has the viscosity of VG 1. The inner member 2 is rotated by the numbers of rotation of 30, 60 and 120 rpm. The result collected in 15 min. is shown in Fig. 5 and the Table 1.

Table 1

For obtaining the lubricant which contains small amount of the coolant by the mixed liquid separating apparatus of the embodiment 1, the numbers of rotation of the inner member 2 is selected to be 60 rpm. To the contrary, for obtaining the large amount of lubricant in the short time, the numbers of rotation of the inner member 2 is selected to be 120 rpm.

### (Measurement 2)

The lubricant is separated from the coolant by the mixed liquid separating apparatus of the embodiment 1. The lubricant to be separated has the viscosity grade of VG 2, VG 22 and VG 68. The numbers of rotation of the inner member 2 is selected to be 120 rpm.
The result collected in one hour is shown in Fig. 6 and the Table 2.

Table 2

As apparent from the Figs. 5 and 6, and the Tables 1 and 2, for obtaining only the lubricant under the numbers of rotation of 20 rpm, selecting the small viscosity difference between the coolant and the lubricant, is preferable. For obtaining large amount of the lubricant in the short time, selecting the large viscosity difference between the coolant and the lubricant, is preferable.

### (Embodiment 2)

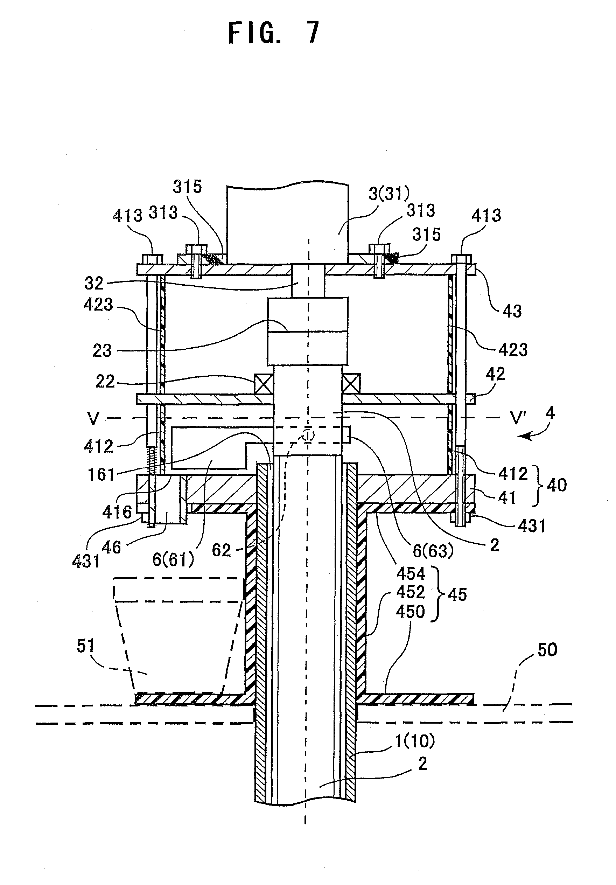

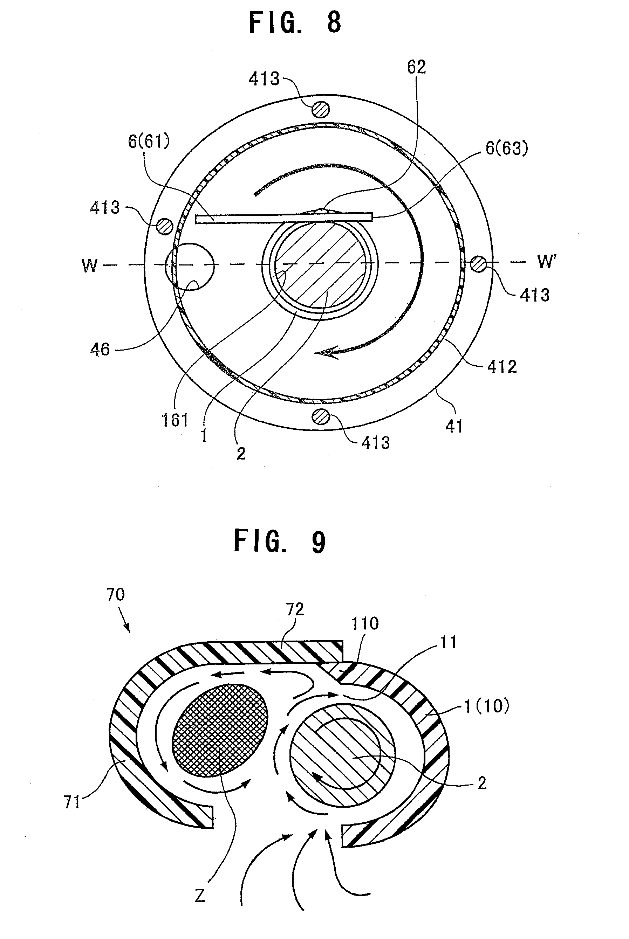

In the mixed liquid separating apparatus of the embodiment 2, a discharging means 4 is disposed instead of the connecting portion 15 in the embodiment 1. Detail of the discharging portion 4 will be explained with reference to Figs. 7 and 8. Fig. 7 is a cross-sectional view taken along a line W-W' in Fig. 8, and Fig. 8 is a cross-sectional view taken along a line V-V' in Fig. 7. Member and element corresponding to that of the embodiment 1 are added same reference numerals.

The discharge means 4 includes a lubricant receiving portion 40, a discharging port 46 (lubricant discharging portion), and a plate-shape scraper 6 made of stainless. Here, the lubricant receiving portion and the lubricant discharging portion correspond to the above particular substance receiving portion and particular substance discharging portion, respectively.

The lubricant receiving portion 40 has a cylindrical shape of which bottom is closed, and which is disposed at the other end of the outer cylindrical body 10 to be coaxial therewith. It includes a bottom portion 41 and a lower cover 412. The bottom portion 41 is made of stainless and has a disc shape. The lower cover 412 made of acryl and having a cylindrical shape is fixed onto an upper surface of the bottom portion 41 via a rubber member (not shown). The bottom portion 41 is provided with a circular opened portion 416 which is opened in the thickness direction thereof, and in which the cylindrical discharging port 46 is fixed. The lower cover 412, having smaller diameter than that of the bottom portion 41, is provided with the discharging port 46 at position striding the fixing position of the lower cover 412.

The other end of the outer cylindrical body 10 forms an opened end 161, and one end of the inner member 2 disposed coaxially with the outer cylindrical body 10 is protruded from the opened end 161. Thus, the opened end 161 of the outer cylindrical body 10 forms a discharging port (161) through which the separated lubricant is discharged.

The scraper 6 is fixed at one end of the inner member 2 to be positioned above the discharging port 161. A scraper body 62, and a fixing portion 63 extended from the scraper body 61 and fixed to the outer peripheral surface of the inner member 2 by a screw 61, are included. Small gap exists between the scraper body 61, and the bottom portion 41 and the lower cover 412 of the lubricant receiving portion 40. The outer peripheral surface of one end of the inner member 2 (portion to which the scraper 6 is fixed is included) is not provided with the screw.

Above the lubricant receiving portion 40, a bearing plate 4 2 made of stainless and has disc shape is fixed coaxially with the lubricant receiving portion 40. On the bearing plate 42, ball bearing 22 which rotatably supports the inner member 2 is mounted.
The end of the inner member 2 is connected with an outputting shaft 32 of a geared motor 30 of the driving means 3 by a coupling 23. The ball bearing 22 and the coupling 23 are covered by an upper cover 42 3 made of acryl and has the cylindrical shape.

On the upper cover 423 mounted on the bearing plate 42, a motor plate 43 made of stainless and has disc shape is mounted. All of the motor plate 43, bearing plate 42 and the bottom portion 41 have four holes each having the same diameter and being positioned at the same location on the circle. The hole of the bottom portion is formed a female screw. Four bolts 413 are inserted into the holes so that fame screws formed at the top end are meshed with the female screws of holes of the bottom portion 41 and nuts 431. Thus,
the motor plate 43, upper cover 423, bearing plate 42, lower cover 412 and the bottom portion 41 are joined integrally.

In the driving means 3, a flange portion 315 and the motor plate 43 of the discharging means 4 are fixed by a bolts 313.

At a lower part of the discharging means 4, a removable setting tool 45 is fixed. The setting tool 45 includes a cylindrical portion 452, and a set surface 450 and an apparatus holding surface 454. The cylindrical portion 452 has an inner space which can store or hold the outer cylindrical body 10 therein.
The set surface 450 and the apparatus holding surface 454 form the flange portion formed at the both ends of the cylindrical portion 45 2. The both flanges has the diameter same as that of the bottom portion 41 etc. The apparatus holding surface 454 is provided with four holes at the position corresponding to that of the bottom portion 41 etc.

In attaching the setting tool 45, the outer cylindrical body 10 is inserted into the cylindrical portion 452, and the nuts 4 3 are unscrewed from the bolts 413 which fix the motor plate 43, bearing plate 42 and the bottom portion 41 integrally. The top end of the bolts 413 are inserted into the holes of the apparatus holding surface 454. Then, the nuts 431 are screwed with the top end of the bolts 413.

The apparatus holding surface 454 is provided with an opened portion so as not to cover the discharging port 46. Preparing plural kinds of the setting tools in which axial lengths of the cylindrical portions 452 are different, can change distance from the discharging port 46 to the setting surface 50.

Next, separating manner for collecting the flown-up oil and separating the lubricant by the mixed liquid separating apparatus of the embodiment 2 will be explained. Into the inserting hole of the tank 5 (refer to Fig. 4) the separating apparatus is inserted, so that the set surface 450 is mounted onto the setting surface 50.

After having set the separating apparatus, the inner member 2 is rotated by the driving means 3. Similar to the embodiment 1, the lubricant O is fed along the male screw of the inner body 2 to the expelling port 161. The lubricant receiving portion 40 receives the lubricant O expelled from the expelling port 161 to store in the lower portion 41 thereof. The lubricant O stored in the lubricant receiving portion 40 is transferred in the lubricant receiving portion 40 by the rotating scraper 6. The longitudinal direction of scraper 6 makes the predetermined angle relative to the radial direction of the lubricant receiving portion 40. As a result, by rotation of the scraper 6 in the direction shown by the arrow, the lubricant O is moved toward the outer peripheral side of the bottom portion 41 along the surface of the scraper 6. Thus, the lubricant O is pushed and gathered into the discharging port 46 formed remote from the center. Then, the lubricant O pressed and gathered at the discharging port 46 drops into the collecting box 51 therethrough by the own weight.

According to the mixed liquid separating apparatus of the embodiment 2, the separated lubricant is effectively discharged outside of the separating apparatus by the discharging means 4. There is no solidified lubricant found on the inner peripheral surface of the discharging port 46. No lubricant was soaked out from the bearing plate 42 and the bottom portion of the motor 3.

### (Embodiment 3)

In a mixed liquid separating apparatus of the embodiment 3, to the inducing port 11 of the outer member 1 of the embodiment 1 or 2, a flow adjusting plate is set. Detail of the adjusting plate will be explained with reference to Fig. 9.

The adjusting plate 70 is made of resin, and has an arc surface portion 71 and a plane portion 72. The arc surface portion 71 has the curvature same as that of the outer cylindrical body 10. The plane portion 72 is extended from one end of the arc surface portion 71 tangentially. The end of the plane portion 72 is fixed to the outer peripheral surface of the edge portion 110 of the inducing port 11.

Part of the mixed liquid being induced in the direction shown by the arrow is obstructed by axial opened end surface 111 to be flown out from the inducing port 11. The flown out mixed liquid is guided by the flow adjusting plate 70 to be stored around the inducing port 11. Especially, when the mixed liquid is the flown-up oil of the used coolant, the high density part thereof is gathered to the center of the flow adjusting plate 70 as shown by Z in Fig. 9.

**Table 1**

| numbers of rotation (rpm) | coolant collected amount (cc/15min.) | oil collected amount (cc/15min.) | total collected amount (cc/15min.) | coolant contained rate (%) |
|---|---|---|---|---|
| 30 | 5 | 33 | 38 | 13 |
| 60 | 5 | 100 | 105 | 5 |
| 120 | 10 | 140 | 150 | 7 |

**Table 2**

| oil viscosity | coolant collected amount (cc/H) | oil collected amount (cc/H) | total coolected amount (cc/H) | coolant contained rate (%) |
|---|---|---|---|---|
| VG2 | 0 | 4 | 4 | 0 |
| VG22 | 0 | 125 | 125 | 0 |
| VG68 | 90 | 200 | 290 | 31 |

## Claims

1. A mixed liquid separating apparatus for separating a particular substance from a mixed liquid containing at least two kinds of substances of which follow-rotating property is different, comprising:
a cylindrical outer member having an inducing port for inducing the mixed liquid at one end thereof, and an expelling port for expelling the separated particular substance at other end thereof;
a rod-shaped inner member disposed coaxially with said outer member to be relatively rotatable thereto;
a driving means for relatively rotating said outer member and said inner member; and
at least one of an inner peripheral surface of said outer member and an outer peripheral surface of said inner member having a spiral guiding wall for guiding the particular substance from the one end to the other end, by the relative rotation between said outer member and said inner member,
wherein the particular substance is separated during feeding to the other end along the guiding surface by the relative rotation between said outer member and said inner member.

2. A mixed liquid separating apparatus according to claim 1,
wherein said outer member and said inner member has quality to follow-rotated strongly to the particular substance.

3. A mixed liquid separating apparatus according to claim 1 or 2, wherein the inner peripheral surface of said outer member has a cylindrical shape, and said inner member has the spiral guiding surface on the outer peripheral surface thereof.

4. A mixed liquid separating apparatus according to one of claims 1 to 3, wherein the outer peripheral surface of said inner member is constructed by a male screw.

5. A mixed liquid separating apparatus according to one of claims 1 to 4, wherein said driving means holds said outer member to be stationary, and rotates said inner member.

6. A mixed liquid separating apparatus according to claim 1, wherein said outer member further includes a discharging means having a particular substance receiving portion and a particular substance discharging portion, the particular substance receiving portion being formed at other end provided with the expellding port for receiving the particular substance expelled from the expelling port, the particular substance discharging portion being formed at the particular substance receiving portion for discharging the particular substance accumulated therein.

7. A mixed liquid separating apparatus according to claim 6, wherein the particular substance discharging portion is a discharging port opened in the gravity acting direction.

8. A mixed liquid separating apparatus according to claim 6, wherein said discharging means further including a transferring means for transferring the particular substance accumulated in the particular substance receiving portion to the discharging port.

9. A mixed liquid separating apparatus according to claim 8, wherein said transferring means is a plate fixed to said inner member, the plate rotating relative to the particular substance receiving portion by the relative rotation between said outer member and said inner member to push and gather the particular substance accumulated to the particular substance receiving portion to the particular substance discharging portion.

10. A mixed liquid separating apparatus according to claim 1 or 2, wherein the mixed liquid contains a liquid of low viscosity, and a liquid of high viscosity corresponding to the particular substance.

11. A mixed liquid separating apparatus according to claim 10, wherein the low viscosity liquid is a coolant, and the high viscosity liquid is a flown-up oil flown up on the coolant.

12. A mixed liquid separating apparatus according to claim 1 or 2, wherein the mixed liquid is a sludge containing the metal swarf corresponding to the particular substance.
